Europäisches Patentamt

European Patent Office

Office européen des brevets

(11) Veröffentlichungsnummer: **0 256 393**
**B1**

(12) **EUROPÄISCHE PATENTSCHRIFT**

(45) Veröffentlichungstag der Patentschrift:
10.01.90

(21) Anmeldenummer: 87111079.7

(22) Anmeldetag: 30.07.87

(51) Int. Cl.⁴: **G01L 1/22**, G01L 3/14, G01L 5/16

(54) Messanordnung zum Erfassen von Kräften und Momenten.

(30) Priorität: 12.08.86 DE 3627381

(43) Veröffentlichungstag der Anmeldung:
24.02.88 Patentblatt 88/8

(45) Bekanntmachung des Hinweises auf die Patenterteilung:
10.01.90 Patentblatt 90/2

(84) Benannte Vertragsstaaten:
DE FR GB IT NL SE

(56) Entgegenhaltungen:
EP-A- 0 176 173
DE-A- 2 917 966
DE-A- 3 406 059
US-A- 3 771 359
US-A- 3 956 930

(73) Patentinhaber: Siemens Aktiengesellschaft,
Wittelsbacherplatz 2, D-8000 München 2(DE)

(72) Erfinder: Fritz, Harald, Dipl.-Ing., Hebelstrasse 5,
D-7517 Waldbronn 3(DE)

**Beschreibung**

Die Erfindung bezieht sich auf eine Meßanordnung gemäß den Merkmalen des Oberbegriffs des Anspruchs 1.

Aus der US-A 3 771 359 ist eine solche Meßanordnung bekannt, bei der die kraftaufnehmenden Teile über mit Dehnungsmeßstreifen versehene breite Stege verbunden sind. Diese Stege weisen somit einen hohen Biegewiderstand auf und sind nur geeignet, die auftretenden Scherkräfte zu messen.

Es ist weiterhin bereits eine Mehrkomponentenkraft- und Momentenmeßkörperanordnung mit Dehnungsmeßstreifen aus der DE-OS 3 406 059 bekannt, bei der auf einem rohrförmigen Meßkörper die Dehnungsmeßstreifen in vorgegebenem Winkel zueinander ausgerichtet angeordnet sind. Jeweils zwei Dehnungsmeßstreifen sind hier zu Halbbrücken in einer Meßanordnung zusammengeschaltet, so daß alle Längs- und Querkräfte sowie die Momente, die auf den Meßkörper einwirken, aufgrund einer Verformung von mindestens einem der Dehnungsmeßstreifen erfaßbar sind. Bei dieser Anordnung der Dehnungsmeßstreifen wird jedoch ein erheblicher Platzbedarf auf der Oberfläche des Meßkörpers benötigt, wobei für viele Anwendungsfälle auch der rohrförmige Meßkörper selbst zuviel Raum beansprucht.

Der Erfindung liegt die Aufgabe zugrunde, eine Meßanordnung zur Erfassung von Kräften und Momenten zu schaffen, die eine möglichst geringe Baugröße auch bei relativ großen Werten der zu erfassenden Kräfte und Momente aufweist.

Zur Lösung dieser Aufgabe weist eine Meßanordnung der eingangs angegebenen Art die Merkmale des Kennzeichens des Anspruchs 1 auf. Gemäß der Erfindung wird in vorteilhafter Weise erreicht, daß durch die Ausnehmungen in diesem flachen Meßkörper Verformteile gebildet sind, die eine hervorragende Detektion der Verformung und somit der Kräfte und Momente erlauben. Die Komponenten der in der zentralen Ausnehmung des Meßkörpers wirkenden Kräfte und/oder Momente werden über die von den kanalartigen Ausnehmungen und den Verbreiterungen gebildeten Stege auf die Verformteile übertragen und hier jeweils von den außen am Meßkörper angebrachten Dehnungsmeßstreifen detektiert. Für eine Anwendung bei Robotersteuerungen muß beispielsweise eine beliebig im Raum wirkende Kraft, welche am Robotergreifer einwirkt, in drei in den Roboterkoordinaten liegende Teilkräfte zerlegt und gleichzeitig in diesen drei Werten angegeben werden. Hierzu können die jeweils auf einem Verformteil angebrachten Dehnungsmeßstreifen zu Halbbrücken in einer Brückenschaltung zusammengeschaltet werden und jeweils die Diagonalspannung als Meßgröße ausgewertet werden.

Zur Messung der radial von der zentralen Ausnehmung zu den äußeren Rändern wirkenden Kräfte sind die Dehnungsmeßstreifen in vorteilhafter Weise in Längsrichtung symmetrisch zu den jeweiligen kanalartigen Ausnehmungen auf dem Umfang des Meßkörpers angeordnet. Eine jeweils in Richtung der kanalartigen Ausnehmung wirkende Kraft führt hier beispielsweise zu einer S-förmigen Dehnung bzw. Stauchung des Verformteils und somit der Dehnungsmeßstreifen. Die jeweils parallel zu den Verformteilen wirkende Kraft verursacht dabei eine gleichsinnige Verformung der benachbarten Dehnungsmeßstreifen, so daß ihre Wirkung ausgefiltert werden kann.

Die axial wirkende Kraft kann gemäß der Erfindung in vorteilhafter Weise durch zwei Dehnungsmeßstreifen, jeweils um 45° zur Achse versetzt überkreuzt angeordnet, auf zwei gegenüberliegenden Seiten der Verformteile detektiert werden.

Eine Messung des Drehmomentes kann beispielsweise gemäß der Erfindung mit den für die radial wirkenden Kräfte angebrachten Dehnungsmeßstreifen durchgeführt werden (um die axiale Kraft drehen), da dieses Drehmoment ebenfalls zu einer S-förmigen Dehnung bzw. Stauchung der Verformteile führt.

Ein bevorzugtes Ausführungsbeispiel der erfindungsgemäßen Meßanordnung weist einen Meßkörper aus einer Aluminiumlegierung Al Zn Mg Cu 0,5 F 48 auf.

Die Erfindung wird anhand der Figuren erläutert, wobei

Figur 1 eine Draufsicht auf ein Ausführungsbeispiel des Meßkörpers mit Ansichten der Randseiten, auf denen sich die Dehnungsmeßstreifen befinden, und

Figur 2 ein Ausführungsbeispiel einer Brückenschaltung mit den Dehnungsmeßstreifen in einer Halbbrücke zeigen.

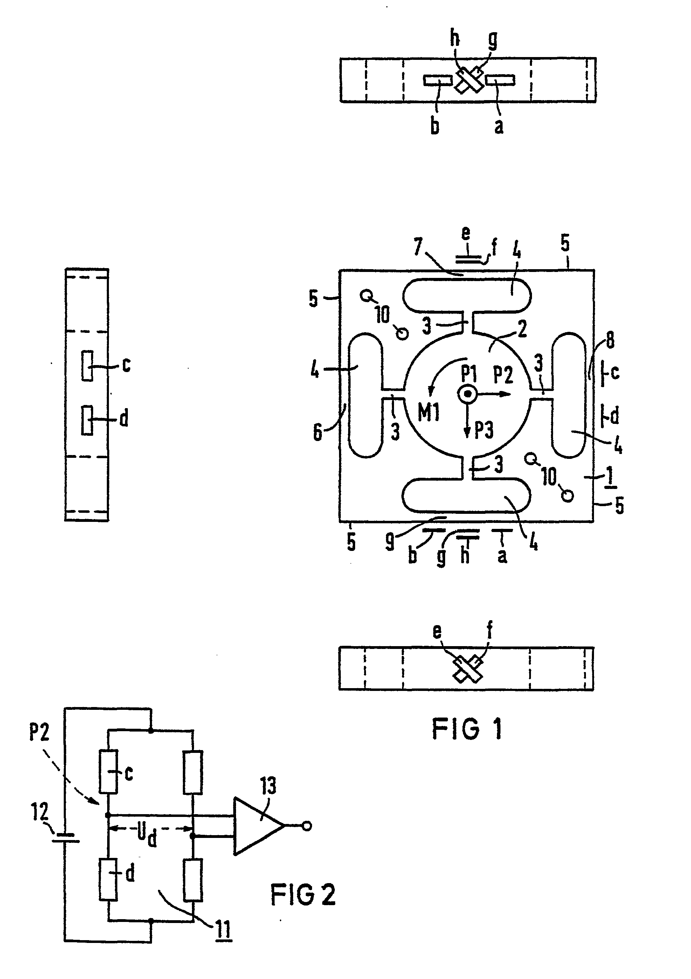

In der Figur 1 ist ein Meßkörper 1 für eine Ausführungsform der erfindungsgemäßen Meßanordnung dargestellt, die eine zentrale Ausnehmung 2 aufweist, in die die hier nicht dargestellten Kräfte ausübende Achse einfügbar ist (rechtwinkliger flacher Meßkörper). Von der zentralen Ausnehmung gehen jeweils rechtwinklig zueinander kanalartige Ausnehmungen 3 ab, die jeweils in Verbreiterungen 4 enden. Zwischen den Verbreiterungen 4 und dem äußeren Rand 5 des Meßkörpers 1 sind somit Verformteile 6, 7, 8, 9 gebildet, die bei einer Beaufschlagung mit dargestellten Teilkräften P1, P2, P3 und einem Moment M1 eine Verformung erfahren. Der Meßkörper 1 wird hierbei an Befestigungspunkten 10 an der Meßanordnung gehalten.

Am Verformteil 6 sind hierbei Dehnungsmeßstreifen c und d in der in der benachbarten Seitenansicht erkennbaren Form angeordnet; sie erfassen die Wirkung der Teilkraft P2. Am Verformteil 9 sind Dehnungsmeßstreifen a und b in der oben gezeigten Seitenansicht dargestellt; sie dienen der Detektierung der Teilkraft P3. Am Verformteil 8 sowie am Verformteil 9 sind Dehnungsmeßstreifen e und f sowie g und h jeweils um 45° zur Achsrichtung (Kraft P1) übereinander gekreuzt angeordnet, wie es aus der unten

dargestellten Seitenansicht für die Dehnungsmeßstreifen e und f erkennbar ist. Die Dehnungsmeßstreifen e und f sowie g und h dienen der Erfassung der axialen Kraft P1, die in den Verformteilen eine Schubspannung erzeugt und somit wiederum zu einer Dehnung oder Stauchung der Dehnungsmeßstreifen führt.

In der folgenden Tabelle ist eine qualitative Dehnungsmatrix dargestellt, die die Wirkung von Kräften P1, P2, P3 und des Drehmoments M1 auf die Dehnungsmeßstreifen a, b, c, d, e und f erläutern soll. Das Zeichen "0" bedeutet, daß keine Verformung erzeugt wird, das Zeichen "+" bedeutet, daß eine Dehnung erfolgt, und das Zeichen "-" bedeutet, daß eine Stauchung erzeugt wird.

Tabelle 1

Qualitative Dehnungsmatrix

| DMS Nr. | a | b | c | d | e | f |
|---------|---|---|---|---|---|---|
| P1 | 0 | 0 | 0 | 0 | + | − |
| P2 | + | + | − | + | + | + |
| P3 | + | − | + | + | + | + |
| M1 | − | − | + | + | + | + |

In der Figur 2 ist ein Ausführungsbeispiel einer Brückenschaltung 11 zur Auswertung der erfaßten Teilkräfte und/oder Momente dargestellt. Die Brücke wird von einer Spannungsquelle 12 versorgt und weist hier in einem Halbbrückenzweig die Dehnungsmeßstreifen c und d auf, die zur Erfassung der Kraft P2 dienen. Im anderen Halbbrückenzweig befinden sich Meßwiderstände. Die Diagonalspannung $U_d$ dieser Brückenschaltung wird mit einem Operationsverstärker 13 ausgewertet, wobei diese Diagonalspannung $U_d$ direkt von der Dehnung oder Stauchung der Dehnungsmeßstreifen c und d abhängig ist.

In der folgenden Tabelle sind die jeweils benötigten Kombinationen der Dehnungsmeßstreifen zur Detektierung der Teilkräfte bzw. des Drehmomentes dargestellt.

Tabelle 2

Halbbrücken für die Komponenten

| Halbbrücke DMS Nr. | | entspricht |
|---------------------|---|-----------|
| (e −f) + (g − h) | ≙ | P1 |
| c − d | ≙ | P2 |
| a − b | ≙ | P3 |
| a − d | ≙ | M1 |

**Patentansprüche**

1. Meßanordnung zum Erfassen von Kräften und/oder Momenten
- mit an Verformteilen (6, 7, 8, 9) einer Feder-/ bzw. Biegeanordnung angebrachten Dehnungsmeßstreifen (a, b, c, d, e, f, g, h), die bei einer Beaufschlagung der Verformteile (6, 7, 8, 9) mit Kräften (P1, P2, P3) und/oder Momenten (M1) eine Dehnung oder Stauchung erfahren,
- mit einer Auswerteschaltung (11), in der die Dehnungsmeßstreifen (a . . . h) Elemente einer Brückenschaltung sind,
- mit einem plattenförmigen Meßkörper (1),
  - bei dem, von einer zentralen Ausnehmung (2) ausgehend, mindestens zwei rechtwinklig zueinander verlaufende kanalartige Ausnehmungen (3) angebracht sind, die jeweils in eine sich verbreiternde weitere Ausnehmung (4) münden,
  dadurch gekennzeichnet,
- daß die zentrale Ausnehmung (2) eine Kräfte (P1 . . . P3) und/oder Momente (M1) ausübende Achse tangential umschließt
- und daß zwischen der verbreiterten Ausnehmung (4) und dem äußeren Rand (5) des plattenförmigen Meßkörpers (1) die Verformteile (6 . . . 9) gebildet sind, auf denen sich außen die Dehnungsmeßstreifen (a . . . h) befinden.

2. Meßanordnung nach Anspruch 1, dadurch gekennzeichnet, - daß zur Erfassung von senkrecht aufeinanderstehenden, radial von der Achse wirkenden Teilkräften (P2, P3) und des Drehmomentes (M1) auf den Verformteilen mindestens zwei Dehnungsmeßstreifen (a, b; c, d) jeweils gleich ausgerichtet symmetrisch zu den kanalartigen Ausnehmungen (3) angebracht sind.

3. Meßanordnung nach Anspruch 1 oder 2, dadurch gekennzeichnet,
- daß zur Erfassung der axial wirkenden Kraft (P1) jeweils zwei Dehnungsmeßstreifen um 45° zur Achse versetzt überkreuzt auf den sich gegenüberliegenden Verformteilen (8, 9) angebracht sind.

4. Meßanordnung nach einem der vorherigen Ansprüche, dadurch gekennzeichnet,
- daß jeweils die mindestens zwei auf einem der Verformteile (6 ... 9) befindlichen Dehnungsmeßstreifen (a ... h) einen Halbbrückenzweig der Brückenschaltung bilden, wobei
- der Spannungsabgriff an der Brückendiagonale (Diagonalspannung $U_d$) auf die Eingänge eines Operationsverstärkers (13) geführt ist.

5. Meßanordnung nach einem der vorherigen Ansprüche, dadurch gekennzeichnet,
- daß der plattenförmige Meßkörper (1) aus einer Aluminiumlegierung Al Zn Mg Cu 0,5 F 48 besteht.

## Claims

1. Measuring device for determining forces and/or moments
– having strain measuring strips (a, b, c, d, e, f, g, h) fitted on deforming parts (6, 7, 8, 9) of a spring/ or bending arrangement, the strips undergoing expansion or compression when the deforming parts (6, 7, 8, 9) are acted on by forces (P1, P2, P3) and/or moments (M1),
– having an evaluation circuit (11) in which the strain measuring strips (a . . . . . h) are elements of a bridge circuit,
– having a plate-shaped measuring body (1),
    – in which, proceeding from a central recess (2), at least two channel-like recesses (3) extending at right angles to each other are fitted and open respectively into a further widening recess (4),
    characterised in that
– the central recess (2) tangentially encloses a shaft exerting forces (P1 . . . . P3) and/or moments (M1)
– and in that between the widened recess (4) and the outer edge (5) of the plate-shaped measuring body (1) there are formed the deforming parts (6 . . . 9), on the outside of which the strain measuring strips (a . . . . h) are located.

2. Measuring device according to claim 1, characterised in that
– to determine mutually perpendicular partial forces (P2, P3) acting radially from the shaft, and the torque (M1), at least two strain measuring strips (a, b; c, d), each similarly aligned symmetrically to the channel-like recesses (3), are fitted on to the deforming parts.

3. Measuring device according to claim 1 or 2, characterised in that to determine the axially working force (P1) respectively two intersecting strain measuring strips offset by 45° to the shaft are fitted on the opposite deforming parts (8, 9).

4. Measuring device according to one of the preceding claims, characterised in that
– the at least two strain measuring strips (a . . . . h) located respectively on one of the deforming parts (6 . . . . 9) form a half-bridge branch of the bridge circuit,
– the voltage pick-up on the bridge diagonal (diagonal voltage $U_d$) being fed to the inputs of an operational amplifier (13).

5. Measuring device according to one of the preceding claims, characterised in that
– the plate-shaped measuring body (1) is made of an aluminium alloy Al Zn Mg Cu 0.5 F 48.

## Revendications

1. Dispositif de mesure servant à déterminer des forces et/ou des moments
– comportant des jauges extensométriques (a, b, c, d, e, f, g, h), qui sont montées sur des éléments déformables (6, 7, 8, 9) d'un dispositif élastique/ de flexion et subissent un allongement ou un refoulement dans le cas où les éléments déformables (6, 7, 8, 9) sont chargés par des forces (P1, P2, P3) et/ou des moments (M1), et
– un circuit d'évaluation (11), dans lequel les jauges extensométriques (a . . . h) constituent des éléments d'un circuit en pont,
– un corps de mesure enforme de plaque (1),
    – dans lequel sont prévus au moins deux évidements en forme de canaux (3), qui sont perpendiculaires entre eux, s'étendent à partir d'un évidement central (2) et débouchent respectivement dans un autre évidement de forme élargie (4),
    caractérisé par le fait
– que l'évidement central (2) entoure tangentiellement un axe appliquant des forces (P1 . . . P3) et/ou des moments (M1),
– qu'entre l'évidement élargi (4) et le bord extérieur (5) du corps de mesure en forme de plaque (1) se trouvent formes les éléments déformables (6 . . . 9), sur lesquels les jauges extensométriques (a . . . h) sont situées sur le côté extérieur.

4

2. Dispositif de mesure suivant la revendication 1, caractérisé par le fait
– que, pour saisir des forces partielles (P2, P3) perpendiculaires entre elles et agissant radialement à partir de l'axe, et le moment de rotation (M1), au moins deux jauges extensométriques (a, b; c, d) sont disposées sur les éléments déformables, en étant alignées de la même manière et symétriquement par rapport aux évidements en forme de canaux (3).

3. Dispositif de mesure suivant la revendication 1 ou 2, caractérisé par le fait que pour saisir la force agissant axialement (P1), respectivement deux jauges extensométriques sont disposées, de manière à se croiser en étant décalées de 45° par rapport à l'axe, sur les éléments déformables (8, 9) situés en vis-à-vis.

4. Dispositif de mesure suivant l'une des revendications précédentes, caractérisé par le fait
– que respectivement les jauges extensométriques (a . . . h) prévues au moins au nombre de deux et situées sur l'un des éléments déformables (6 . . . 9), forment une branche constituant une moitié du circuit en pont,
– le prélèvement de la tension dans la diagonale du pont (tension de diagonale $U_d$) est envoyé aux entrées d'un amplificateur opérationnel (13).

5. Dispositif de mesure suivant la revendication précédente, caractérisé par le fait
– que le corps de mesure en forme de plaque (1) est constitué par un alliage d'aluminium Al Zn Mg Cu 0,5 F 48.

EP 0 256 393 B1

FIG 1

FIG 2